(19) Europäisches Patentamt
European Patent Office
Office européen des brevets

(11) **EP 3 583 237 B1**

## (12) EUROPÄISCHE PATENTSCHRIFT

(45) Veröffentlichungstag und Bekanntmachung des Hinweises auf die Patenterteilung:
**30.06.2021 Patentblatt 2021/26**

(21) Anmeldenummer: **18714692.3**

(22) Anmeldetag: **16.02.2018**

(51) Int Cl.:
| | |
|---|---|
| *B32B 15/01* (2006.01) | *C22C 18/00* (2006.01) |
| *C22C 18/04* (2006.01) | *C22C 21/02* (2006.01) |
| *C22C 21/10* (2006.01) | *C22C 38/00* (2006.01) |
| *C22C 38/42* (2006.01) | *C22C 38/44* (2006.01) |
| *C22C 38/48* (2006.01) | *C22C 38/46* (2006.01) |
| *C22C 38/50* (2006.01) | *C22C 38/54* (2006.01) |
| *C21D 8/02* (2006.01) | *C21D 8/04* (2006.01) |
| *C22C 38/04* (2006.01) | *C22C 38/06* (2006.01) |
| *C22C 38/12* (2006.01) | *C22C 38/14* (2006.01) |
| *C22C 38/02* (2006.01) | |

(86) Internationale Anmeldenummer:
**PCT/EP2018/053876**

(87) Internationale Veröffentlichungsnummer:
**WO 2018/149961 (23.08.2018 Gazette 2018/34)**

(54) **VERFAHREN ZUM HERSTELLEN VON STAHLBLECHEN, STAHLBLECH UND DESSEN VERWENDUNG**

METHOD FOR PRODUCING STEEL SHEETS, STEEL SHEET AND USE THEREOF

PROCÉDÉ DE FABRICATION DE TÔLES D'ACIER, TÔLE D'ACIER ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2017 DE 102017103303**

(43) Veröffentlichungstag der Anmeldung:
**25.12.2019 Patentblatt 2019/52**

(73) Patentinhaber: **voestalpine Stahl GmbH**
**4020 Linz (AT)**

(72) Erfinder:
- STÖGMÜLLER, Markus
  4061 Pasching (AT)
- PAESOLD, Dieter
  4501 Neuhofen (AT)
- HEBESBERGER, Thomas
  4061 Pasching (AT)

(74) Vertreter: **HGF**
**Neumarkter Straße 18**
**81673 München (DE)**

(56) Entgegenhaltungen:
**WO-A1-2016/055227    WO-A1-2016/055227**

DE-A1-102012 017 703    DE-A1-102012 017 703

- **BASJAN BERKHOUT: "PREMIUM PAINT APPEARANCE: SERICA , THE HOT-DIP GALVANISED SURFACE FINISH FOR EXPOSED AUTOMOTIVE PANELS", INTERNATIONAL PAINT&COATING MAGAZINE, Nr. 34, 31. August 2015 (2015-08-31), Seiten 92-96, XP055471246,**
- **Stahl Wirtschaftsvereinigung: "Continuously Hot-Dip Coated Steel Strip and Sheet Characteristic Properties 095 - E", , 31. Dezember 2017 (2017-12-31), XP055471249, Gefunden im Internet: URL:http://www.stahl-online.de/wp-content/ uploads/2013/10/CM-095E_Continuously-Hot-D ip-Coated-Steel-Strip-and-Sheet_final.pdf [gefunden am 2018-04-27]**
- **Steel Tata: "Serica Tightly controlled low surface waviness", , 31 December 2017 (2017-12-31), XP055471187, Retrieved from the Internet: URL:https://www.tatasteeleurope.com/static _files/Downloads/Automotive/Data%20Sheets/ Tata%20Steel%20AM%20-%20Serica%20-%20da ta% 20sheet%20EN.pdf [retrieved on 2018-04-27]**

**EP 3 583 237 B1**

• Basjan Berkhout: "PREMIUM PAINT APPEARANCE: SERICA , THE HOT-DIP GALVANISED SURFACE FINISH FOR EXPOSED AUTOMOTIVE PANELS", international PAINT&COATING magazine, no. 34, 31 August 2015 (2015-08-31), pages 92-96, XP055471246,
• Stahl Wirtschaftsvereinigung: "Continuously Hot-Dip Coated Steel Strip and Sheet Characteristic Properties 095 - E", , 31 December 2017 (2017-12-31), XP055471249, Retrieved from the Internet: URL:http://www.stahl-online.de/wp-content/uploads/2013/10/CM-095E_Continuously-Hot-Dip-Coated-Steel-Strip-and-Sheet_final.pdf [retrieved on 2018-04-27]

## Beschreibung

Die vorliegende Erfindung betrifft ein Verfahren zur Herstellung von Stahlblechen mit einer verbesserten optischen Güte nach dem Umformen.

Um das optische Erscheinungsbild von Automobilen im lackierten Zustand weiter zu verbessern, wurde herausgefunden, dass die Anpassung der Bandtopographie zur Verbesserung der Lackanmutung zwar wichtig, aber nicht ausreichend ist. Eine Vielzahl von Parametern ist für ein gutes Lackerscheinungsbild beim Fertigen von geformten und lackierten Blechen maßgeblich.

Eine wesentliche Maßzahl für eine gute Lackierbarkeit und eine gute Lackanmutung ist der sogenannte Wave-Surface-Arithmetic-Value (Wsa). In www.blechnet.com "Neuartige Blechverzinkung bringt Automobillack auf Hochglanz", 17. Oktober 2013, wird ausgeführt, dass ein Wsa-Wert der Bleche unter 0,35 $\mu$m für gute Lackanmutung sorgt. Ein niedriger Wsa-Wert würde zunächst gute Lackanmutung bedeuten. Weil der Wsa-Wert zugleich mit der mittleren Rauheit (Ra) korreliere, würde auch die Umformfähigkeit beeinflusst. Es wird ausgeführt, dass es in der Praxis darauf ankäme, den Wsa-Wert der Bleche unter 0,35 $\mu$m zu senken, wobei bei herkömmlichen Blechen der Wsa durchaus über 0,5 $\mu$m liegen würde, und gleichzeitig genügend Schmiertaschen für die Umformung zur Verfügung zu stellen, was durch die Erhöhung der sogenannten Spitzenzahl gelänge.

Hierbei wird darauf abgestellt, mit der Dressierwalze ähnlich wie in der Drucktechnik die spätere Topografie des Blechs als negative Zugabe vorweg zu nehmen. Um die oben genannten Wsa-Werte zu erreichen, wurden neue Walzentexturen hergestellt, zudem wurden thermische Prozesse in den Öfen verbessert.

Ein vergleichbarer Bericht ist von thyssenkrupp Steel Europe unter www.besserlackieren.de veröffentlicht, in dem ebenfalls beschrieben wird, dass die Oberflächenbearbeitung des verzinkten Blechs eine entsprechende Güte ermöglicht.

Aus der EP 0 234 698 B1 ist z. B. ein Verfahren bekannt, bei dem eine Oberflächenrauheit mit definierten Erhebungsbereichen erzeugt wird.

Aus der DE 112014000102 T5 ist ein Verfahren bekannt, welches durch spezielle Düseneinstellungen die Welligkeit von Automobilteilen verringern soll.

Aus der ÖNORM EN10346 sind kontinuierlich schmelztauchveredelte Flacherzeugnisse aus Stahl zum Kaltumformen bekannt, wobei diese Norm die bekannten Beschichtungen Zink, Zinkeisen, Zinkaluminium, Zinkmagnesium und Aluminiumzink und Aluminiumsilizium betrifft.

Die dort genannten Stähle sind durchgehend niedriglegierte Stähle und insbesondere Mehrphasenstähle, TRIP-Stähle, Komplexphasenstähle und ferritisch-bainitische Stähle.

Insbesondere werden im Automobilbereich in der Außenhaut IF- und BH-Stähle eingesetzt.

Unter einem IF-Stahl versteht man einen "Interstitial Free"-Stahl, der keine interstitiell eingelagerten Fremdatome besitzt (die geringen Gehalte an Kohlenstoff und Stickstoff sind vollständig durch Titan und/oder Niob als Karbide bzw. Nitride abgebunden) und damit eine hervorragende plastische Umformbarkeit besitzt. Derartige Stähle werden für Tiefziehteile im Automobilbau eingesetzt.

Bake-Hardening Stähle (BH-Stähle) zeichnen sich durch einen signifikanten Anstieg der Streckgrenze im Zuge des Lackeinbrennens (typischerweise bei 170°C für 20min) in Kombination mit einer sehr guten Umformbarkeit aus. Weiters besitzen diese Stähle eine sehr gute Beulsteifigkeit, weswegen diese Stähle gerne für Außenhautanwendungen verwendet werden.

Aufgabe der Erfindung ist es, ein Verfahren zur Herstellung von Stahlblechen zu schaffen, mit dem die gewünschten Wsa-Werte im verformten Zustand besser erreicht werden und die Bereiche sicher gehalten werden können.

Die Aufgabe wird mit einem Verfahren mit den Merkmalen des Anspruchs 1 gelöst.

Die Messung der Wsa-Werte erfolgte an Marciniak-Streckziehproben mit 5% Verformung in Anlehnung an SEP1941, aber in Walzrichtung.

Erfindungsgemäß wurde festgestellt, dass allein durch die Optimierung der Langwelligkeit im unverformten Zustand der Wsa-Wert von Außenhautteilen im verformten Zustand nicht zuverlässig und sicher im erfindungsgemäßen Bereich <0,35 $\mu$m gehalten werden kann.

Erfindungsgemäß wurde festgestellt, dass die sichere Einhaltung der geforderten Langwelligkeitsgrenzen im verformten Zustand durch gezielte Maßnahmen am Werkstoff möglich ist.

Das heißt, dass speziell durch eine Änderung der Legierungszusammensetzung bei den verwendeten IF- und BH-Stählen eine fertigungssichere Produktion von Außenhautmaterialien mit reduzierter Langwelligkeit im verformten Zustand erreicht werden kann.

Dementsprechend wurde erfindungsgemäß herausgefunden, dass eine gesicherte Einstellung von reduzierter Langwelligkeit im verformten Zustand insbesondere bei IF-Stählen und Bake-Hardening-Stählen durch das Zulegieren von Niob mit Gehalten >0,01 Gew.-% erreichbar ist. Insbesondere kann z. B. die Stahlsorte HX180BD hiermit mit einem Wsa-Wert auf einem Niveau unter 0,30 $\mu$m stabilisiert werden.

Wird bei einem Einsatz von IF-Stählen anstatt des üblichen Titan-Konzeptes für Außenhautbleche ein Titan-Niob-Konzept verwendet, kann das Wsa-Niveau auf im Mittel 0,27 μm stabilisiert werden.

Wie erfindungsgemäß festgestellt werden konnte, wird die Langwelligkeit im verformten Zustand bei der Wahl geeigneter Dressierwalzen durch die vor dem Dressiervorgang im Zuge des Abstreifvorganges eingestellte Langwelligkeit nicht signifikant beeinflusst.

Als Vorteil hat sich auch erwiesen, dass bei Zugabe von Nb zum Stahl die Aufheizraten beim Rekristallisationsglühen in einem weiten Bereich variiert werden können, ohne den Wsa-Wert negativ zu beeinflussen. Die Aufheizraten liegen zwischen 8 K/s und 30 K/s.

Der Dressier- oder Nachwalzvorgang dient der Einstellung der mechanischen Eigenschaften und der gezielten Beeinflussung der Oberflächenrauheit. Im Zuge dieses Vorganges wird sowohl Rauheit als auch Langwelligkeit von der Walze auf das Band übertragen.

Der Dressiergrad für die "Interstitial Free"-Stähle liegt zur Einstellung der geforderten Materialeigenschaften zwischen 0,85 und 1,7%.

Die Erfindung wird anhand einiger Zeichnungen beispielhaft erläutert. Es zeigen hierbei:

Figur 1: Die Wsa-Werte im unverformten und verformten Zustand bei dressiertem Bake-Hardening-Stahlmaterial aus dem Stand der Technik;

Figur 2: Die Gegenüberstellung der Langwelligkeit bei dressiertem Bake-Hardening-Stahl nach dem Stand der Technik (bis Beispiel 86) gegen die erfindungsgemäß verbesserten Wsa-Werte jeweils vor und nach der Verformung (Beispiele 87 bis 184);

Figur 3: Den Zusammenhang zwischen dem Niob-Gehalt im Grundmaterial (BH-Stahl dressiert) und den gemessenen Wsa-Werten im verformten Zustand;

Figur 4: Der Wsa-Wert in Abhängigkeit von der Verformung und dem verwendeten Abstreifmedium bei der Schmelztauchbeschichtung;

Figur 5: Die Verbesserung der Wsa-Werte durch die Zulegierung von Niob;

Figur 6: Ein Diagramm zeigend den Wsa-Wert über den Gehalt an Niob im verformten Zustand bei einem dressierten IF-Stahl;

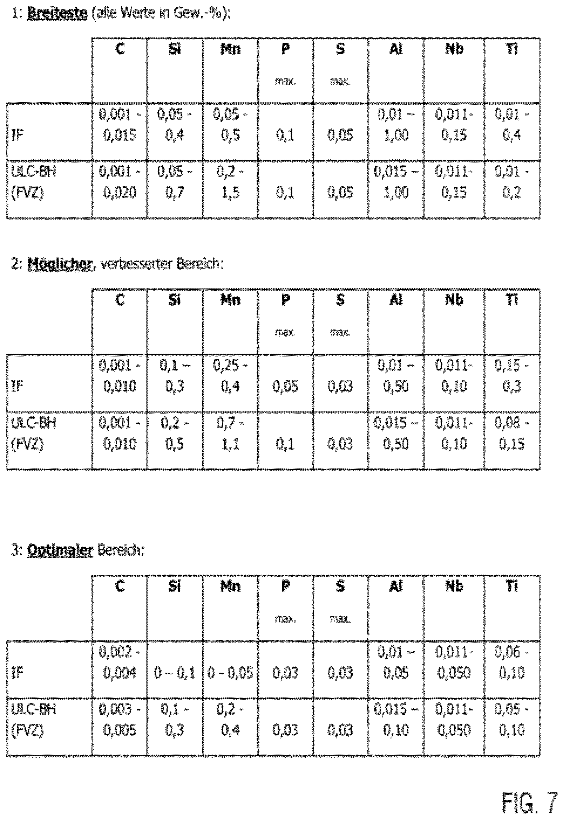

Figur 7: Drei Zusammensetzungsbereiche für erfindungsgemäße IF- und ULC-BH-Stähle;

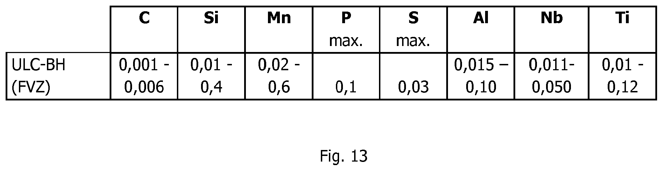

Figur 8-13: Erfindungsgemäße IF- und BH-Stähle;

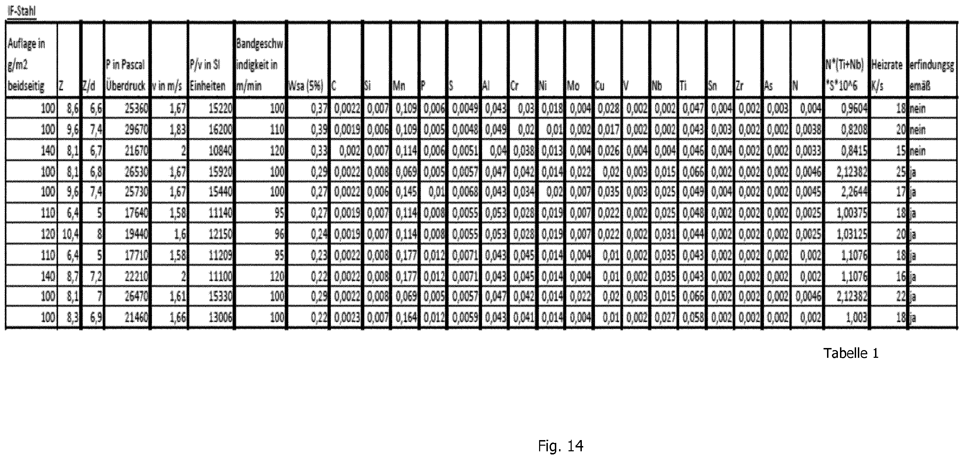

Figur 14: Beispiele mit IF-Stählen mit Zinküberzug;

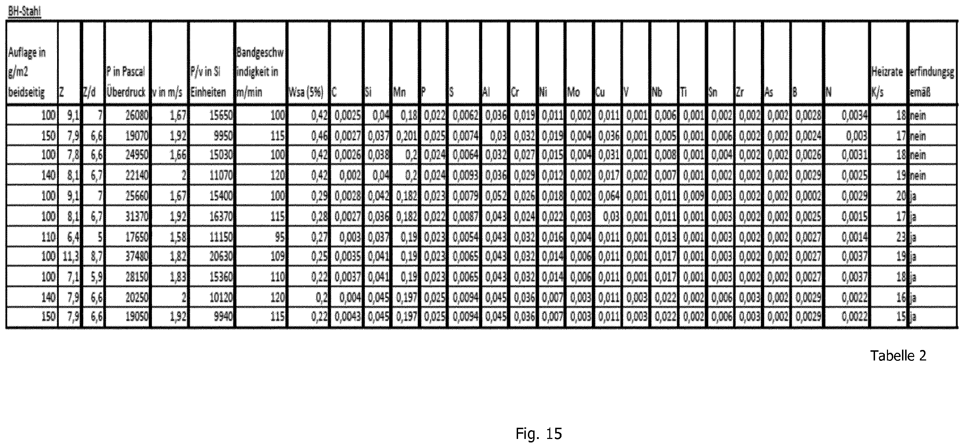

Figur 15: Beispiele mit BH-Stählen mit Zinküberzug;

Figur 16: weitere Beispiele für IF-Stähle mit einem metallischen Überzug aus ZnMg;

Figur 17: weitere Beispiele für BH-Stähle mit einem metallischen Überzug aus ZnMg.

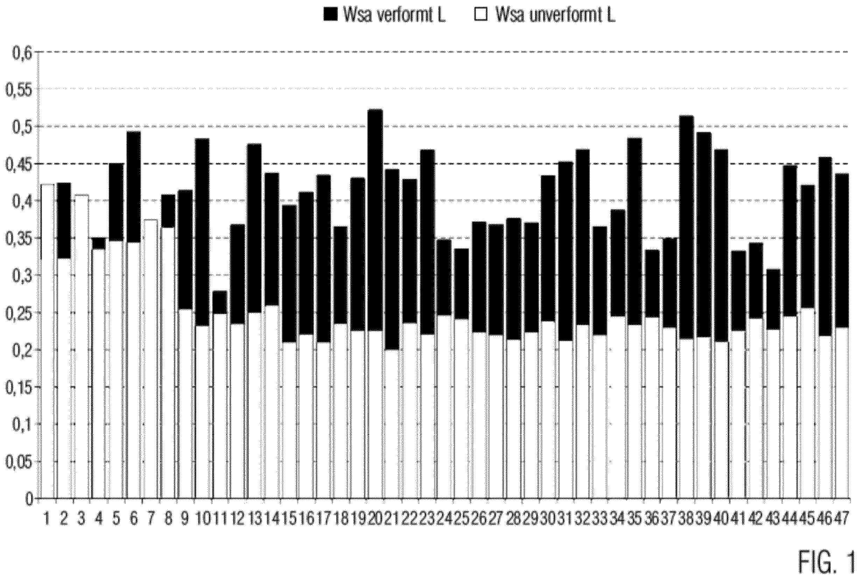

In Figur 1 sieht man einen handelsüblichen Bake-Hardening-Stahl, welcher nach dem Stand der Technik hergestellt und verarbeitet wurde. Hierbei sind die hellen Balken die Wsa-Werte für den unverformten Zustand und die schwarzen Balken die Werte für den verformten Zustand. Eine durch Optimierung des Dressiervorganges gegebene Verbesserung der Wsa-Werte im unverformten Zustand spiegelt sich nicht in den Wsa-Werten im verformten Zustand wieder.

Man erkennt, dass eine ganz erhebliche Schwankungsbreite bei den verformten Wsa-Werten vorliegt. Gleichzeitig ergibt sich ein signifikanter Anstieg der Wsa-Werte im Zuge der Verformung. Diese extrem breite Streuung der Werte, die längs zur Walzrichtung an Marciniak Prüfkörpern mit fünfprozentiger Verformung ermittelt wurden, zeigt, dass der Wsa-Wert nach dem Stand der Technik kaum beherrschbar ist.

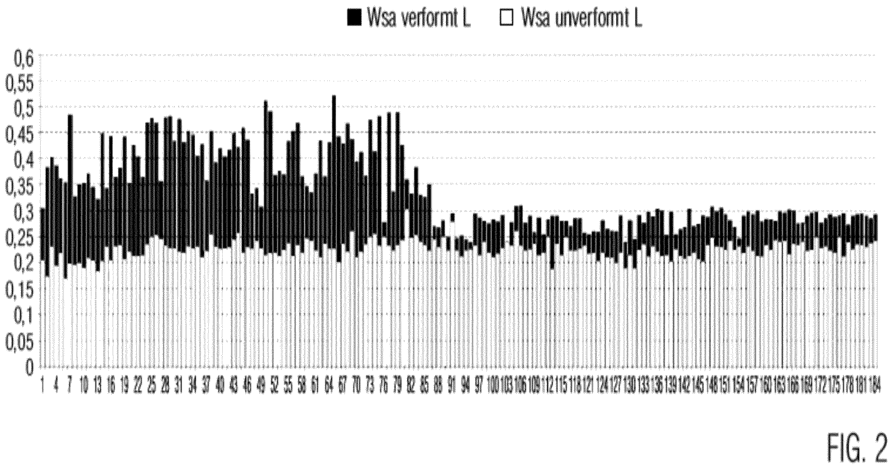

In Figur 2 erkennt man diese erhebliche Streuung bei den Wsa-Werten, wobei wiederum die verformten Werte bis zum Beispiel 86 noch stärker streuen als die unverformten Werte. Hierbei handelt es sich um Beispiele von einem Bake-Hardening-Stahl nach dem Stand der Technik.

Ab Beispiel 87 handelt es sich um einen erfindungsgemäßen Bake-Hardening-Stahl. Während die unverformten Wsa-Werte eine dem Stand der Technik entsprechende Streuung haben, kann man sehr gut die vorteilhaften, erheblich verbesserten Wsa-Werte nach der Verformung erkennen. Man erkennt, dass mit der Erfindung die Werte gesichert um oder unter 0,30 μm gehalten werden können.

Erfindungsgemäß wird in der Legierung ein Niob-Gehalt >0,01 Gew.-% (= 100 ppm) eingestellt. Erfindungsgemäß wird bevorzugt der Niob-Gehalt auf 0,011 bis 0,15 Gew.-% eingestellt, weiter bevorzugt auf 0,011 bis 0,10 Gew.-% und weiter bevorzugt auf 0,011 bis 0,05 Gew.-%. Mit diesen Werten können ausgesprochen gute Wsa-Werte erzielt werden.

Um das Wsa-Niveau noch weiter zu verringern kann der Niob-Gehalt noch höher gewählt werden, wobei sich besonders gute Werte bei der Zulegierung im Bereich von 0,020 bis 0,040 Gew.-% gezeigt haben.

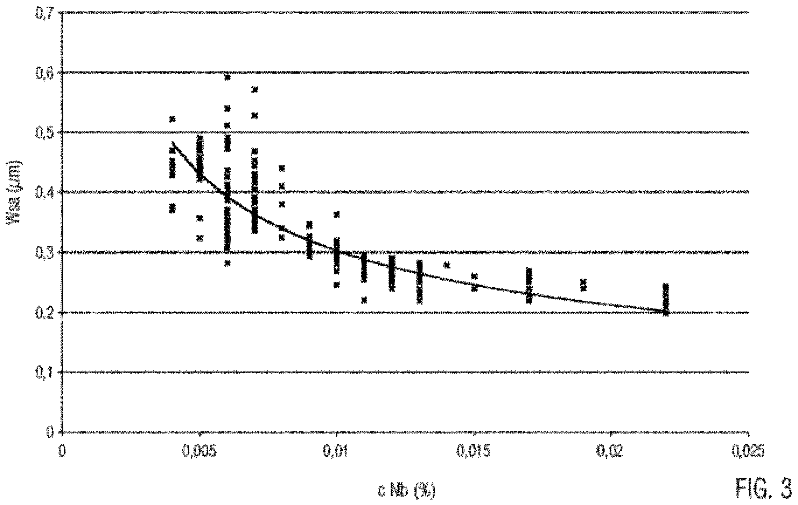

In Figur 3 ist der signifikante Zusammenhang zwischen dem Nb-Gehalt im BH-Stahl und dem sich einstellenden Wsa-Niveau nach Umformung (5%) zu erkennen. Mit zunehmendem Gehalt an Nb wird nicht nur der Wsa-Wert niedriger, auch die Streuung nimmt signifikant ab.

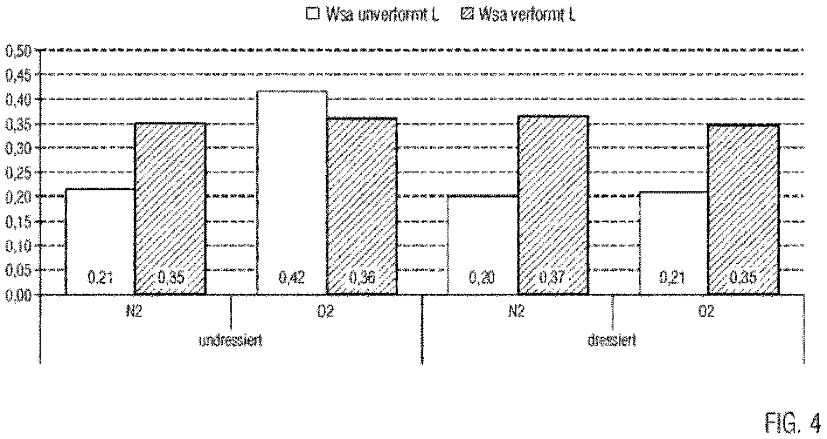

In Figur 4 erkennt man, dass im Stand der Technik bei der Verwendung von herkömmlichen IF-Stählen mit Niob-Gehalten <0,002 Gew.-% eine Abhängigkeit der Wsa-Werte im undressierten unverformten Zustand von den Abstreifbedingungen im Zuge der Aufbringung eines metallischen Überzuges nach dem Sendzimirverfahren gegeben ist. Mit Stickstoff als Abstreifmedium sind deutlich geringere Werte erzielbar. Dieser durch das Abstreifen mit Stickstoff gegebene Vorteil ist nach dem Verformen nicht mehr vorhanden.

Durch den Einsatz geeigneter Dressierwalzen ist es möglich, die Welligkeitswerte des metallisch beschichteten Bandes im unverformten Zustand unabhängig vom Abstreifmedium auf ein geringes Niveau zu reduzieren. Diese Verbesserung lässt sich jedoch im verformten Zustand nicht mehr darstellen.

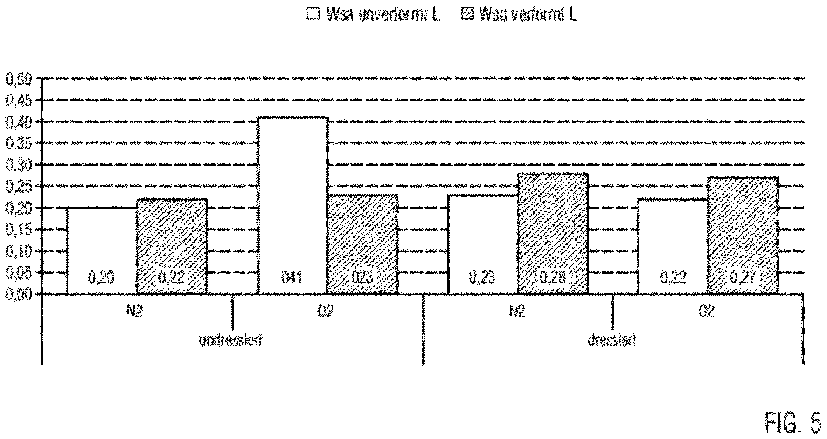

In einem Vergleichsversuch wird die Langwelligkeit an einem IF-Stahl mit einem erfindungsgemäßen Niob-Gehalt von 0,015 Gew.-% (Figur 5) ebenfalls jeweils undressiert und dressiert gemessen, wobei auch hier eine Beschichtung nach dem Sendzimir-Verfahren vorliegt und einmal mit Stickstoff und einmal mit Luft abgestreift wurde.

Durch die Zugabe von Nb konnte erreicht werden, dass kein oder kaum ein Anstieg der Wsa-Werte durch die Verformung gegeben ist.

Insbesondere nach der Verformung zeigen die erfindungsgemäß produzierten IF-Stähle erheblich bessere Eigenschaften als handelsübliche IF-Stähle nach dem Stand der Technik.

Erfindungsgemäß kann der IF-Stahl die Legierungszusammensetzung aufweisen nach Anspruch 2.

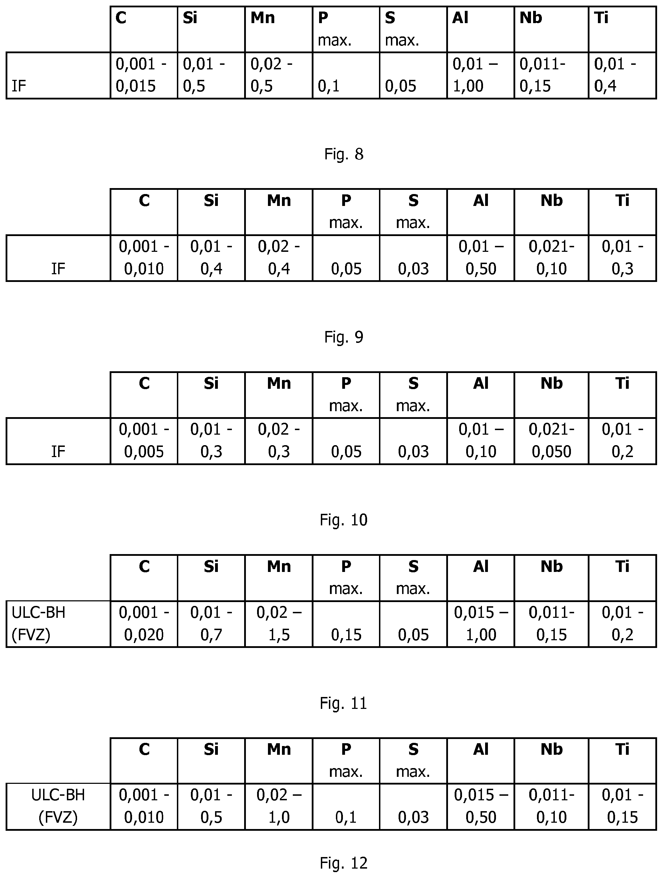

Alternativ kann bei der Zusammensetzung nach Fig. 8 anstelle von, als auch in Kombination mit Niob auch Vanadin zwischen 0,01 und 0,15 Gew.-%,
Zirkon zwischen 0,01 und 0,3 Gew.-%,
Hafnium zwischen 0,02 und 0,5 Gew.-%,
Wolfram zwischen 0,02 und 0,5 Gew.-% oder
Tantal zwischen 0,02 und 0,5 Gew.-% zulegiert werden.

Bevorzugt weist der IF-Stahl die Zusammensetzung nach Fig. 9 auf:
Alternativ kann bei der Zusammensetzung nach Fig. 9 anstelle von, als auch in Kombination mit Niob auch Vanadin zwischen 0,01 und 0,12 Gew.-%,
Zirkon zwischen 0,01 und 0,25 Gew.-%,
Hafnium zwischen 0,02 und 0,4 Gew.-%,
Wolfram zwischen 0,02 und 0,4 Gew.-% oder
Tantal zwischen 0,02 und 0,4 Gew.-% zulegiert werden.

Eine besonders bevorzugte Zusammensetzung des IF-Stahles ergibt sich aus Fig. 10, wobei alternativ anstelle von, als auch in Kombination mit Niob auch
Vanadin zwischen 0,01 und 0,10 Gew.-%,
Zirkon zwischen 0,01 und 0,2 Gew.-%,
Hafnium zwischen 0,02 und 0,3 Gew.-%,
Wolfram zwischen 0,02 und 0,3 Gew.-% oder
Tantal zwischen 0,02 und 0,3 Gew.-% zulegiert werden kann.

Rest jeweils Eisen und erschmelzungsbedingte Verunreinigungen.
Die oben genannten Elemente können einzeln oder in Kombination von mehreren dieser Elemente zulegiert werden, beispielsweise also jeweils 0,02 Gew.-% Hafnium und Wolfram.

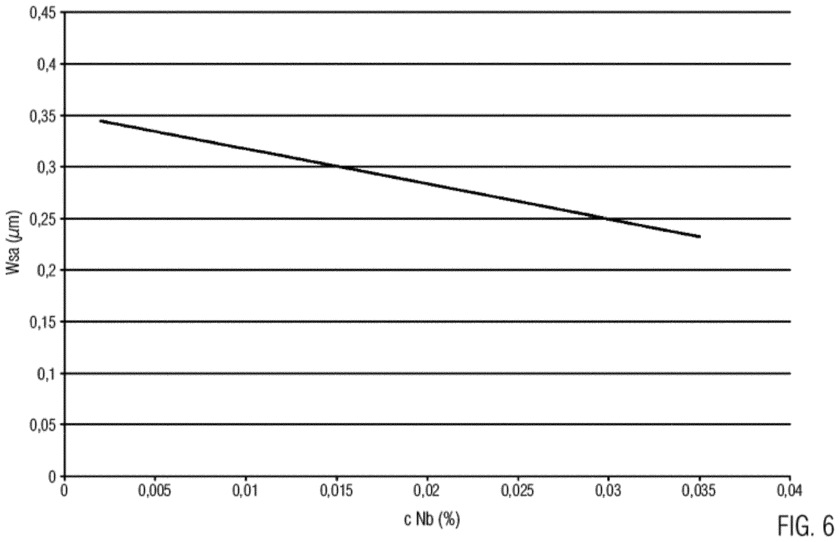

In Figur 6 ist der entsprechende gemessene Zusammenhang am IF-Stahl ersichtlich, welcher die Wsa-Werte nach Verformung über dem Niob-Gehalt anzeigt. Hierbei ist eine stetige Verbesserung des Wsa-Wertes mit Zunahme des Nb-Gehaltes erkennbar. Dieser Zusammenhang ist vermutlich auch bei Zulegierungen über 0,04 Gew.-% Niob hinaus gegeben. Jedoch ermöglichen die erfindungsgemäßen Bereiche einerseits eine ausreichende Wsa-Wertabsenkung und verhindern andererseits unerwünschte Verfestigungseffekte beim Grundmaterial, welche zu einer Verringerung der Umformbarkeit führen würden.

Für eine geringe Langwelligkeit im unverformten und in weiterer Folge im verformten Zustand wird die Walzenrauheit (Ra) für den Dressiervorgang auf Werte zwischen 1,6 und 3,3 μm eingestellt, um die vom Kunden geforderten Rauheitswerte am Band einhalten zu können. Eine weitere Absenkung der Wsa-Werte ist durch Absenkung der Walzenrauheiten möglich, würde aber eine Absenkung der kundenseitigen Rauheitsvorgaben bedingen.

Als Beschichtungsmaterial bei Feuerverzinkungen sind insbesondere alle Feuerverzinkungstauchbäder geeignet.

Insbesondere geeignet ist für die Beschichtung von IF- oder auch Bake-Hardening-Stählen eine Zinkmagnesiumbeschichtung, wobei das Zinkbad 0,2 bis 8,0 Gew.- % Magnesium enthält.

Anstelle von Magnesium kann auch Aluminium in der Schmelze verwendet werden bzw. können innerhalb der angegebenen Grenzen von 0,2 bis 8 Gew.-% auch Magnesium und Aluminium gleichermaßen verwendet werden.

Bevorzugt liegt bei einer Mischung der Bereich bei 2 Gew.-% Magnesium und 2 Gew.-% Aluminium bzw. 2,5 Gew.-% Aluminium und 1,5 Gew.-% Magnesium.
Beschichtungen im Sinne der Anmeldung sind metallische Überzüge.

Bei der Erfindung ist von Vorteil, dass es durch Maßnahmen innerhalb des Legierungskonzeptes im Stahl gelingt, den Wsa-Wert auf einem sehr niedrigen Niveau sehr stabil darzustellen.

Die folgenden Beispiele sollen den positiven Einfluss des Niobgehaltes auf die Ausbildung des Wsa-Werteniveaus am umgeformten Bauteil (gemessen an Marciniak-Streckziehproben mit 5% Verformung) darstellen und diesen von anderen Einflüssen abgrenzen.

Bei den im Folgenden aufgelisteten Beispielen für die Beschichtungsvarianten Z und ZM wurden der Vollständigkeit halber Bandgeschwindigkeiten und Düseneinstellungen mit angegeben. Sie liegen alle innerhalb der nach dem Stand der Technik üblichen Parameter, haben jedoch keinen signifikanten Einfluss auf die Wsa-Werte im verformten Zustand. Die Abstreifung erfolgte ausschließlich mit Stickstoff, da ansonsten die optische Anmutung der Bleche nicht zur Zufriedenheit der Kunden produziert werden konnte.

Tabellen 1 und 2 zeigen bei einer üblichen Zinkbeschichtung beispielsweise nach einer Feuerverzinkung sowohl die Abstreifparameter als auch die entsprechenden Welligkeitswerte.

Z ist der Abstand zwischen dem Band und der Abstreifdüse längs der Abstreifmedienaustrittstelle, d die mittlere Höhe der Austrittsstelle der Düse über dem Zinkbad; beide Angaben in mm.

v entspricht der Bandgeschwindigkeit in m/s.

Die Legierungszusammensetzung zeigt die jeweiligen Legierungselemente in Gewichtsprozent.

Vor allem wird aus den Beispielen in der Tabelle deutlich, dass die Düsenparameter kaum Einfluss auf die Welligkeitswerte haben, da die erfindungsgemäßen als auch nicht erfindungsgemäßen Ausführungsbeispiele mit ähnlichen Düsenparametern hergestellt wurden.

Als auch zeigt sich in den vier Tabellen, dass es erfindungsgemäß wichtig ist, die folgende Bedingung einzuhalten:

$$N*(Ti+Nb)*S*10^6$$

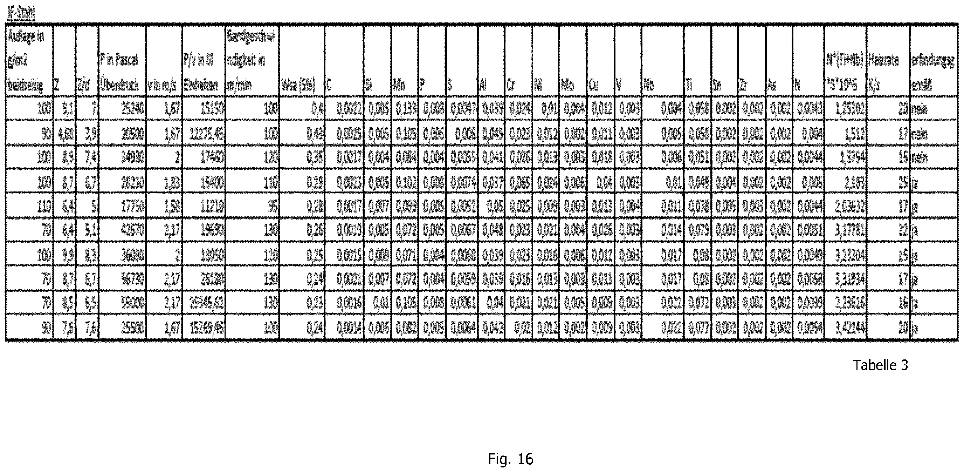

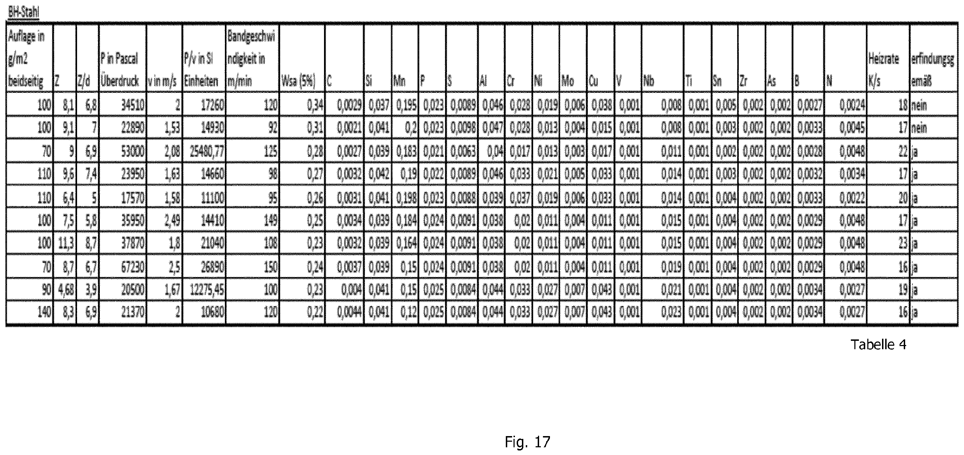

Unter der Maßgabe, dass
bei reinen Zinkbeschichtungen (Z) das Produkt größer als 1 und bei Zink-Magnesium-Beschichtungen (ZM) größer als 2 ist.
Erfindungsgemäß kann damit sicher gestellt werden, dass gröbere Ausscheidungen gebildet werden. Dies führt zu einer besseren Umformbarkeit ohne die Festigkeitswerte negativ zu beeinflussen.
Wie die Beispiele in Tabelle 3 entspricht Fig. 16 bzw. Tabelle 4 entspricht Fig. 17 verdeutlichen, kann bei einer ZnMg-Beschichtung auf IF- und BH-Stählen der Wsa-Wert im verformten Zustand ab einem Nb-Gehalt von 0,01 Gew.-% sicher um bzw. unter 0,3 μm gehalten werden. Bei zunehmendem Gehalt an Nb sinkt der im verformten Zustand erzielbare Wsa-Wert weiter, sodass ab 0,02 Gew.-% an Nb Werte unter 0,25 μm gesichert erreicht werden können. Dies gilt nur unter der Voraussetzung, dass die Wsa-Werte im unverformten Zustand nicht höher als die hier angegebenen Werte sind. Auch hier wird deutlich, dass die Düseneinstellung keinen wesentlichen Einfluss auf die Welligkeit hat.

Z ist der Abstand zwischen dem Band und der Abstreifdüse längs der Abstreifmedienaustrittstelle, d die mittlere Höhe der Austrittsstelle der Düse über dem Zinkbad; beide Angaben in mm.

v entspricht der Bandgeschwindigkeit in m/s.

Jeweils mit ZM Beschichtung mit 1,5 Gew.-% Mg, 2,5 Gew.-%

Alle Legierungsgehalte sind in Gew.-% angegeben, sofern nicht explizit davon abweichend dargestellt.

**Patentansprüche**

1.  Verfahren zum Herstellen von Stahlblech, insbesondere für Außenhautbleche von Fahrzeugen, wobei eine Stahllegierung einer gewünschten Zusammensetzung erschmolzen, vergossen und anschließend zu Blech gewalzt wird, wobei die Stahllegierung ein "Interstitial Free"-Stahl (IF-Stahl) ist und das Stahlblech nach dem Walzen geglüht, danach mit einer metallischen Korrosionsschutzschicht versehen und anschließend dressiert wird, **dadurch gekennzeichnet, dass** zur Erzielung eines Wsa-Wertes von unter 0,35 μm mit möglichst enger Streuung Niob mit einem Gehalt >0,01 Gew.-%, bevorzugt >0,011 Gew.-%, zulegiert wird, wobei die Legierung die folgende Bedingung erfüllt: N*(Ti+Nb)*S*10^6, wobei bei Zinkauflagen das Produkt größer 1 ist und bei ZM-Auflagen größer 2 ist.

2. Verfahren nach Anspruch 1, **dadurch gekennzeichnet, dass** ein IF-Stahl mit der folgenden Analyse in Gew.-% erschmolzen wird:

| | | | |
|----|------------------|---------------------|------------------------------|
| C | 0,001 bis 0,020 | bevorzugt 0,001-0,010 | weiter bevorzugt 0,001-0,006 |
| Si | 0,01 bis 0,7 | bevorzugt 0,01-0,5 | weiter bevorzugt 0,01-0,4 |
| Mn | 0,02 bis 1,5 | bevorzugt 0,02-1,0 | weiter bevorzugt 0,02-0,6 |
| P | max. 0,15 | bevorzugt max. 0,1 | weiter bevorzugt max. 0,1 |
| S | max. 0,05 | bevorzugt max. 0,03 | weiter bevorzugt max. 0,03 |
| Al | 0,015 bis 1,0 | bevorzugt 0,015-0,5 | weiter bevorzugt 0,015-0,10 |
| Nb | 0,011 bis 0,15 | bevorzugt 0,011-0,10 | weiter bevorzugt 0,011-0,05 |
| Ti | 0,01 bis 0,2 | bevorzugt 0,01-0,15 | weiter bevorzugt 0,01-0,12 |

Optional eines oder mehrere folgender Elemente:

Bor bis max. 100 ppm und/oder
Vanadium bis 0,4 Gew.-% und/oder
Zirkonium bis 0,4 Gew.-%, und/oder
Hafnium bis 0,5 Gew.-%, und/oder
Wolfram bis 0,5 Gew.-%, und/oder
Tantal bis 0,5 Gew.-%,
Rest Eisen und erschmelzungsbedingte Verunreinigungen.

3. Verfahren nach Anspruch 1 oder 2, **dadurch gekennzeichnet, dass** ein IF-Stahl mit der folgenden Analyse in Gew.-% erschmolzen wird:

| | | | |
|----|------------------|---------------------|------------------------------|
| C | 0,001 bis 0,020 | bevorzugt 0,001-0,010 | weiter bevorzugt 0,001-0,006 |
| Si | 0,01 bis 0,7 | bevorzugt 0,01-0,5 | weiter bevorzugt 0,01-0,4 |
| Mn | 0,02 bis 1,5 | bevorzugt 0,02-1,0 | weiter bevorzugt 0,02-0,6 |
| P | max. 0,15 | bevorzugt max. 0,1 | weiter bevorzugt max. 0,1 |
| S | max. 0,05 | bevorzugt max. 0,03 | weiter bevorzugt max. 0,03 |
| Al | 0,015 bis 1,0 | bevorzugt 0,015-0,5 | weiter bevorzugt 0,015-0,10 |
| Nb | 0,02 bis 0,15 | bevorzugt 0,021-0,10 | weiter bevorzugt 0,021-0,05 |
| Ti | 0,01 bis 0,2 | bevorzugt 0,01-0,15 | weiter bevorzugt 0,01-0,12 |

Optional eines oder mehrere folgender Elemente:

Bor bis max. 100 ppm und/oder
Vanadium bis 0,4 Gew.-% und/oder
Zirkonium bis 0,4 Gew.-%, und/oder
Hafnium bis 0,5 Gew.-%, und/oder
Wolfram bis 0,5 Gew.-%, und/oder
Tantal bis 0,5 Gew.-%, und/oder
Rest Eisen und erschmelzungsbedingte Verunreinigungen.

4. Verfahren nach einem der vorhergehenden Ansprüche, **dadurch gekennzeichnet, dass** die metallische Korrosionsschutzschicht schmelzflüssig aufgetragen wird, wobei die Beschichtung eine Zinkbeschichtung, eine Zink-Magnesium-Beschichtung, eine Zink-Aluminium-Beschichtung, eine Zink-Aluminium-Magnesium-Beschichtung, eine Aluminium-Zink- oder eine Aluminium-Silizium-Beschichtung ist.

5. Verfahren nach Anspruch 4, **dadurch gekennzeichnet, dass** eine Beschichtung aufgebracht wird, die neben Zink 0,2 - 8 Gew.-% Magnesium und/oder Aluminium enthält.

6. Verfahren nach Anspruch 5, **dadurch gekennzeichnet, dass** die Beschichtung 2 - 2,5 Gew.-% Aluminium und 1,5 - 2 Gew.-% Magnesium enthält.

7. Verfahren nach einem der vorgehenden Ansprüche, **dadurch gekennzeichnet, dass** Dressierwalzen mit einer Rauheit (Ra) von 1,6 bis 3,3 μm verwendet werden.

8. Verfahren nach einem der vorhergehenden Ansprüche, **dadurch gekennzeichnet, dass** der Dressiergrad zwischen 0,85 und 1,7 % ist.

9. Verfahren nach einem der vorhergehenden Ansprüche, **dadurch gekennzeichnet, dass** die Aufheizrate zwischen 8 K/s und 30 K/s liegen dürfe.

10. Stahlblech hergestellt mit einem Verfahren nach einem der vorhergehenden Ansprüche mit einer Zusammensetzung gemäß Anspruch 2 oder Anspruch 3.

11. Verwendung eines Stahlblechs nach Anspruch 10 für Außenhautteile von Kraftfahrzeugen und Gebäuden.

**Claims**

1. A method of producing sheet steel, in particular for outer shell sheets of vehicles, wherein a steel alloy of a desired composition is smelted, poured, and then rolled into sheets, the steel alloy being an "interstitial free" (IF) steel and the steel sheet being annealed after rolling, subsequently provided with a metallic anti-corrosion coating, and then temper-rolled,
**characterised in that**, in order to achieve a Wsa value of less than 0,35 μm with the narrowest possible spread, niobium is alloyed with a content of >0.01% by weight, preferably >0.011% by weight, wherein
the alloy meets the following condition: N*(Ti+Nb)*S*10^6, wherein the product is greater than 1 with zinc coatings and greater than 2 with zinc-magnesium (ZM) coatings.

2. The method as claimed in claim 1, **characterised in that** an IF steel is smelted with the following analysis in % by weight:

| | | | |
|----|----|----|----|
| C | 0.001 to 0.020 | preferably 0.001-0.010 | more preferably 0.001-0.006 |
| Si | 0.01 to 0.7 | preferably 0.01-0.5 | more preferably 0.01-0.4 |
| Mn | 0.02 to 1.5 | preferably 0.02-1.0 | more preferably 0.02-0.6 |
| P | max. 0.15 | preferably max. 0.1 | more preferably max. 0.1 |
| S | max. 0.05 | preferably max. 0.03 | more preferably max. 0.03 |
| Al | 0.015 to 1.0 | preferably 0.015-0.5 | more preferably 0.015-0.10 |
| Nb | 0.011 to 0.15 | preferably 0.011-0.10 | more preferably 0.011-0.05 |
| Ti | 0.01 to 0.2 | preferably 0.01-0.15 | more preferably 0.01-0.12 |

optionally one or more of the following elements:

boron at up to max. 100 ppm, and/or
vanadium at up to 0.4% by weight, and/or
zirconium at up to 0.4% by weight, and/or
hafnium at up to 0.5% by weight, and/or
tungsten at up to 0.5% by weight, and/or
tantalum at up to 0.5% by weight,
the balance being iron and impurities from smelting.

3. The method as claimed in claim 1 or 2, **characterised in that** an IF steel is smelted with the following analysis in % by weight:

| | | | |
|---|---|---|---|
| C | 0.001 to 0.020 | preferably 0.001-0.010 | more preferably 0.001-0.006 |
| Si | 0.01 to 0.7 | preferably 0.01-0.5 | more preferably 0.01-0.4 |
| Mn | 0.02 to 1.5 | preferably 0.02-1.0 | more preferably 0.02-0.6 |
| P | max. 0.15 | preferably max. 0.1 | more preferably max. 0.1 |
| S | max. 0.05 | preferably max. 0.03 | more preferably max. 0.03 |
| Al | 0.015 to 1.0 | preferably 0.015-0.5 | more preferably 0.015-0.10 |
| Nb | 0.02 to 0.15 | preferably 0.021-0.10 | more preferably 0.021-0.05 |
| Ti | 0.01 to 0.2 | preferably 0.01-0.15 | more preferably 0.01-0.12 |

optionally one or more of the following elements:

boron at up to max. 100 ppm, and/or
vanadium at up to 0.4% by weight, and/or
zirconium at up to 0.4% by weight, and/or
hafnium at up to 0.5% by weight, and/or
tungsten at up to 0.5% by weight, and/or
tantalum at up to 0.5% by weight, and/or
the balance being iron and impurities from smelting.

4. The method as claimed in any one of the preceding claims, **characterised in that** the metallic anti-corrosion coating is applied in a molten state, wherein the coating is a zinc coating, a zinc-magnesium coating, a zinc-aluminium coating, a zinc-aluminium-magnesium coating, an aluminium-zinc or an aluminium-silicon coating.

5. The method as claimed in claim 4, **characterised in that** a coating is applied, containing, in addition to zinc, 0.2-8% by weight of magnesium and/or aluminium.

6. The method as claimed in claim 5, **characterised in that** the coating contains 2-2.5% by weight of aluminium and 1.5-2% by weight of magnesium.

7. The method as claimed in any one of the preceding claims, **characterised in that** temper rolls having a roughness (Ra) of 1.6 to 3.3 $\mu$m are used.

8. The method as claimed in any one of the preceding claims, **characterised in that** the amount of temper rolling is between 0.85 und 1.7%.

9. The method as claimed in any one of the preceding claims, **characterised in that** the heating rate should be between 8 K/s and 30 K/s.

10. A sheet steel, manufactured using a method according to any one of the preceding claims, having a composition according to claim 2 or claim 3.

11. A use of sheet steel according to claim 10 for outer shell components of motor vehicles and buildings.

**Revendications**

1. Procédé de fabrication de tôle d'acier, en particulier pour des tôles destinées à former une peau extérieure de véhicules, un alliage d'acier d'une composition souhaitée étant fondu, coulé puis laminé sous forme de tôle, l'alliage d'acier étant un acier sans interstitiels ou IF (Interstitial Free) et la tôle d'acier étant recuite après le laminage, revêtue ensuite d'une couche métallique de protection contre la corrosion puis dressée,
**caractérisé en ce que** du niobium est ajouté par alliage dans une proportion > 0,01 % en poids, de préférence > 0,011 % en poids, ce qui permet d'obtenir une valeur Wsa inférieure à 0,35 $\mu$m avec une dispersion aussi étroite que possible,
l'alliage remplissant la condition suivante : N*(Ti+Nb)*S*10^6, le produit étant supérieur à 1 en cas de couches de zinc et supérieur à 2 en cas de couches de zinc-magnésium (ZM).

**2.** Procédé selon la revendication 1, **caractérisé en ce qu'**un acier IF est fondu avec l'analyse en % en poids suivante :

| | | | |
|---|---|---|---|
| C | 0,001 à 0,020 | de préférence 0,001-0,010 | mieux encore 0,001-0,006 |
| Si | 0,01 à 0,7 | de préférence 0,01-0,5 | mieux encore 0,01-0,4 |
| Mn | 0,02 à 1,5 | de préférence 0,02-1,0 | mieux encore 0,02-0,6 |
| P | 0,15 max. | de préférence 0,1 max. | mieux encore 0,1 max. |
| S | 0,05 max. | de préférence 0,03 max. | mieux encore 0,03 max. |
| Al | 0,015 à 1,0 | de préférence 0,015-0,5 | mieux encore 0,015-0,10 |
| Nb | 0,011 à 0,15 | de préférence 0,011-0,10 | mieux encore 0,011-0,05 |
| Ti | 0,01 à 0,2 | de préférence 0,01-0,15 | mieux encore 0,01-0,12 |

en option, un ou plusieurs des éléments suivants :

bore jusqu'à 100 ppm max. et/ou
vanadium jusqu'à 0,4 % en poids et/ou
zirconium jusqu'à 0,4 % en poids et/ou
hafnium jusqu'à 0,5 % en poids et/ou
wolfram jusqu'à 0,5 % en poids et/ou
tantale jusqu'à 0,5 % en poids,
le reste étant constitué de fer et d'impuretés résultant de la fusion.

**3.** Procédé selon la revendication 1 ou 2, **caractérisé en ce qu'**un acier IF est fondu avec l'analyse en % en poids suivante :

| | | | |
|---|---|---|---|
| C | 0,001 à 0,020 | de préférence 0,001-0,010 | mieux encore 0,001-0,006 |
| Si | 0,01 à 0,7 | de préférence 0,01-0,5 | mieux encore 0,01-0,4 |
| Mn | 0,02 à 1,5 | de préférence 0,02-1,0 | mieux encore 0,02-0,6 |
| P | 0,15 max. | de préférence 0,1 max. | mieux encore 0,1 max. |
| S | 0,05 max. | de préférence 0,03 max. | mieux encore 0,03 max. |
| Al | 0,015 à 1,0 | de préférence 0,015-0,5 | mieux encore 0,015-0,10 |
| Nb | 0,02 à 0,15 | de préférence 0,021-0,10 | mieux encore 0,021-0,05 |
| Ti | 0,01 à 0,2 | de préférence 0,01-0,15 | mieux encore 0,01-0,12 |

en option, un ou plusieurs des éléments suivants :

bore jusqu'à 100 ppm max. et/ou
vanadium jusqu'à 0,4 % en poids et/ou
zirconium jusqu'à 0,4 % en poids et/ou
hafnium jusqu'à 0,5 % en poids et/ou
wolfram jusqu'à 0,5 % en poids et/ou
tantale jusqu'à 0,5 % en poids et/ou
le reste étant constitué de fer et d'impuretés résultant de la fusion.

**4.** Procédé selon l'une des revendications précédentes, **caractérisé en ce que** la couche métallique de protection contre la corrosion est appliquée en fusion, le revêtement étant un revêtement de zinc, un revêtement de zinc-magnésium, un revêtement de zinc-aluminium, un revêtement de zinc-aluminium-magnésium, un revêtement d'aluminium-zinc ou d'aluminium-silicium.

**5.** Procédé selon la revendication 4, **caractérisé en ce qu'**un revêtement contenant 0,2-8 % en poids de magnésium et/ou d'aluminium en plus du zinc est appliqué.

**6.** Procédé selon la revendication 5, **caractérisé en ce que** le revêtement contient 2-2,5 % en poids d'aluminium et 1,5-2 % en poids de magnésium.

**7.** Procédé selon l'une des revendications précédentes, **caractérisé en ce que** des cylindres de dressage d'une rugosité (Ra) entre 1,6 et 3,3 μm sont utilisés.

8. Procédé selon l'une des revendications précédentes, **caractérisé en ce que** le degré de dressage est entre 0,85 et 1,7 %.

9. Procédé selon l'une des revendications précédentes, **caractérisé en ce que** la vitesse de montée en température peut se trouver entre 8 K/s et 30 K/s.

10. Tôle d'acier fabriquée au moyen d'un procédé selon l'une des revendications précédentes, avec une composition selon la revendication 2 ou la revendication 3.

11. Utilisation d'une tôle d'acier selon la revendication 10 pour des pièces de peau extérieure des véhicules automobiles et des bâtiments.

FIG. 1

FIG. 2

FIG. 3

FIG. 4

FIG. 5

□ Wsa unverformt L    ☒ Wsa verformt L

FIG. 6

1: **Breiteste** (alle Werte in Gew.-%):

| | C | Si | Mn | P max. | S max. | Al | Nb | Ti |
|---|---|---|---|---|---|---|---|---|
| IF | 0,001 - 0,015 | 0,05 - 0,4 | 0,05 - 0,5 | 0,1 | 0,05 | 0,01 – 1,00 | 0,011- 0,15 | 0,01 - 0,4 |
| ULC-BH (FVZ) | 0,001 - 0,020 | 0,05 - 0,7 | 0,2 - 1,5 | 0,1 | 0,05 | 0,015 – 1,00 | 0,011- 0,15 | 0,01 - 0,2 |

2: **Möglicher**, verbesserter Bereich:

| | C | Si | Mn | P max. | S max. | Al | Nb | Ti |
|---|---|---|---|---|---|---|---|---|
| IF | 0,001 - 0,010 | 0,1 – 0,3 | 0,25 - 0,4 | 0,05 | 0,03 | 0,01 – 0,50 | 0,011- 0,10 | 0,15 - 0,3 |
| ULC-BH (FVZ) | 0,001 - 0,010 | 0,2 - 0,5 | 0,7 - 1,1 | 0,1 | 0,03 | 0,015 – 0,50 | 0,011- 0,10 | 0,08 - 0,15 |

3: **Optimaler** Bereich:

| | C | Si | Mn | P max. | S max. | Al | Nb | Ti |
|---|---|---|---|---|---|---|---|---|
| IF | 0,002 - 0,004 | 0 – 0,1 | 0 - 0,05 | 0,03 | 0,03 | 0,01 – 0,05 | 0,011- 0,050 | 0,06 - 0,10 |
| ULC-BH (FVZ) | 0,003 - 0,005 | 0,1 - 0,3 | 0,2 - 0,4 | 0,03 | 0,03 | 0,015 – 0,10 | 0,011- 0,050 | 0,05 - 0,10 |

FIG. 7

| | C | Si | Mn | P max. | S max. | Al | Nb | Ti |
|---|---|---|---|---|---|---|---|---|
| IF | 0,001 - 0,015 | 0,01 - 0,5 | 0,02 - 0,5 | 0,1 | 0,05 | 0,01 – 1,00 | 0,011- 0,15 | 0,01 - 0,4 |

Fig. 8

| | C | Si | Mn | P max. | S max. | Al | Nb | Ti |
|---|---|---|---|---|---|---|---|---|
| IF | 0,001 - 0,010 | 0,01 - 0,4 | 0,02 - 0,4 | 0,05 | 0,03 | 0,01 – 0,50 | 0,021- 0,10 | 0,01 - 0,3 |

Fig. 9

| | C | Si | Mn | P max. | S max. | Al | Nb | Ti |
|---|---|---|---|---|---|---|---|---|
| IF | 0,001 - 0,005 | 0,01 - 0,3 | 0,02 - 0,3 | 0,05 | 0,03 | 0,01 – 0,10 | 0,021- 0,050 | 0,01 - 0,2 |

Fig. 10

| | C | Si | Mn | P max. | S max. | Al | Nb | Ti |
|---|---|---|---|---|---|---|---|---|
| ULC-BH (FVZ) | 0,001 - 0,020 | 0,01 - 0,7 | 0,02 – 1,5 | 0,15 | 0,05 | 0,015 – 1,00 | 0,011- 0,15 | 0,01 - 0,2 |

Fig. 11

| | C | Si | Mn | P max. | S max. | Al | Nb | Ti |
|---|---|---|---|---|---|---|---|---|
| ULC-BH (FVZ) | 0,001 - 0,010 | 0,01 - 0,5 | 0,02 – 1,0 | 0,1 | 0,03 | 0,015 – 0,50 | 0,011- 0,10 | 0,01 - 0,15 |

Fig. 12

| | C | Si | Mn | P max. | S max. | Al | Nb | Ti |
|---|---|---|---|---|---|---|---|---|
| ULC-BH (FVZ) | 0,001 - 0,006 | 0,01 - 0,4 | 0,02 - 0,6 | 0,1 | 0,03 | 0,015 – 0,10 | 0,011- 0,050 | 0,01 - 0,12 |

Fig. 13

IF-Stahl

| Auflage in g/m2 beidseitig | Z | Z/d | P in Pascal Überdruck | v in m/s | P/v in SI Einheiten | Bandgeschwindigkeit in m/min | Wsa (5%) | C | Si | Mn | P | S | Al | Cr | Ni | Mo | Cu | V | Nb | Ti | Sn | Zr | As | N | N*(Ti+Nb)*S*10^6 | Heizrate K/s | erfindungsgemäß |
|---|---|---|---|---|---|---|---|---|---|---|---|---|---|---|---|---|---|---|---|---|---|---|---|---|---|---|---|
| 100 | 8,6 | 6,6 | 25360 | 1,67 | 15220 | 100 | 0,37 | 0,0022 | 0,007 | 0,109 | 0,006 | 0,0049 | 0,043 | 0,03 | 0,018 | 0,004 | 0,028 | 0,002 | 0,002 | 0,047 | 0,004 | 0,002 | 0,003 | 0,004 | 0,9604 | 18 | nein |
| 100 | 9,6 | 7,4 | 29670 | 1,83 | 16200 | 110 | 0,39 | 0,0019 | 0,006 | 0,109 | 0,005 | 0,0048 | 0,049 | 0,02 | 0,01 | 0,002 | 0,017 | 0,002 | 0,002 | 0,043 | 0,003 | 0,002 | 0,002 | 0,0038 | 0,8208 | 20 | nein |
| 140 | 8,1 | 6,7 | 21670 | 2 | 10840 | 120 | 0,33 | 0,002 | 0,007 | 0,114 | 0,006 | 0,0051 | 0,04 | 0,038 | 0,013 | 0,004 | 0,026 | 0,004 | 0,004 | 0,046 | 0,004 | 0,002 | 0,002 | 0,0033 | 0,8415 | 15 | nein |
| 100 | 8,1 | 6,8 | 26530 | 1,67 | 15920 | 100 | 0,29 | 0,0022 | 0,008 | 0,069 | 0,005 | 0,0057 | 0,047 | 0,042 | 0,014 | 0,022 | 0,02 | 0,003 | 0,015 | 0,066 | 0,002 | 0,002 | 0,002 | 0,0046 | 2,12382 | 25 | ja |
| 100 | 9,6 | 7,4 | 25730 | 1,67 | 15440 | 100 | 0,27 | 0,0022 | 0,006 | 0,145 | 0,01 | 0,0068 | 0,043 | 0,034 | 0,02 | 0,007 | 0,035 | 0,003 | 0,025 | 0,049 | 0,004 | 0,002 | 0,002 | 0,0045 | 2,2644 | 17 | ja |
| 110 | 6,4 | 5 | 17640 | 1,58 | 11140 | 95 | 0,27 | 0,0019 | 0,007 | 0,114 | 0,008 | 0,0055 | 0,053 | 0,028 | 0,019 | 0,007 | 0,022 | 0,002 | 0,025 | 0,048 | 0,002 | 0,002 | 0,002 | 0,0025 | 1,00375 | 18 | ja |
| 120 | 10,4 | 8 | 19440 | 1,6 | 12150 | 96 | 0,24 | 0,0019 | 0,007 | 0,114 | 0,008 | 0,0055 | 0,053 | 0,028 | 0,019 | 0,007 | 0,022 | 0,002 | 0,031 | 0,044 | 0,002 | 0,002 | 0,002 | 0,0025 | 1,03125 | 20 | ja |
| 110 | 6,4 | 5 | 17710 | 1,58 | 11209 | 95 | 0,23 | 0,0022 | 0,008 | 0,177 | 0,012 | 0,0071 | 0,043 | 0,045 | 0,014 | 0,004 | 0,01 | 0,002 | 0,035 | 0,043 | 0,002 | 0,002 | 0,002 | 0,002 | 1,1076 | 18 | ja |
| 140 | 8,7 | 7,2 | 22210 | 2 | 11100 | 120 | 0,22 | 0,0022 | 0,008 | 0,177 | 0,012 | 0,0071 | 0,043 | 0,045 | 0,014 | 0,004 | 0,01 | 0,002 | 0,035 | 0,043 | 0,002 | 0,002 | 0,002 | 0,002 | 1,1076 | 16 | ja |
| 100 | 8,1 | 7 | 26470 | 1,61 | 15330 | 100 | 0,29 | 0,0022 | 0,008 | 0,069 | 0,005 | 0,0057 | 0,047 | 0,042 | 0,014 | 0,022 | 0,02 | 0,003 | 0,015 | 0,066 | 0,002 | 0,002 | 0,002 | 0,0046 | 2,12382 | 22 | ja |
| 100 | 8,3 | 6,9 | 21460 | 1,66 | 13006 | 100 | 0,22 | 0,0023 | 0,007 | 0,164 | 0,012 | 0,0059 | 0,043 | 0,041 | 0,014 | 0,004 | 0,01 | 0,002 | 0,027 | 0,058 | 0,002 | 0,002 | 0,002 | 0,002 | 1,003 | 18 | ja |

Tabelle 1

Fig. 14

EP 3 583 237 B1

BH-Stahl

| Auflage in g/m2 beidseitig | Z | Z/d | P in Pascal Überdruck | v in m/s | P/v in SI Einheiten | Bandgeschwindigkeit in m/min | Wsa (5%) | C | Si | Mn | P | S | Al | Cr | Ni | Mo | Cu | V | Nb | Ti | Sn | Zr | As | B | N | Heizrate K/s | erfindungsgemäß |
|---|---|---|---|---|---|---|---|---|---|---|---|---|---|---|---|---|---|---|---|---|---|---|---|---|---|---|---|
| 100 | 9,1 | 7 | 26080 | 1,67 | 15650 | 100 | 0,42 | 0,0025 | 0,04 | 0,18 | 0,022 | 0,0062 | 0,036 | 0,019 | 0,011 | 0,002 | 0,011 | 0,001 | 0,006 | 0,001 | 0,002 | 0,002 | 0,002 | 0,0028 | 0,0034 | 18 | nein |
| 150 | 7,9 | 6,6 | 19070 | 1,92 | 9950 | 115 | 0,46 | 0,0027 | 0,037 | 0,201 | 0,025 | 0,0074 | 0,03 | 0,032 | 0,019 | 0,004 | 0,036 | 0,001 | 0,005 | 0,001 | 0,006 | 0,002 | 0,002 | 0,0024 | 0,003 | 17 | nein |
| 100 | 7,8 | 6,6 | 24950 | 1,66 | 15030 | 100 | 0,42 | 0,0026 | 0,038 | 0,2 | 0,024 | 0,0064 | 0,032 | 0,027 | 0,015 | 0,004 | 0,031 | 0,001 | 0,008 | 0,001 | 0,004 | 0,002 | 0,002 | 0,0026 | 0,0031 | 18 | nein |
| 140 | 8,1 | 6,7 | 22140 | 2 | 11070 | 120 | 0,42 | 0,002 | 0,04 | 0,2 | 0,024 | 0,0093 | 0,036 | 0,029 | 0,012 | 0,002 | 0,017 | 0,002 | 0,007 | 0,001 | 0,002 | 0,002 | 0,002 | 0,0029 | 0,0025 | 19 | nein |
| 100 | 9,1 | 7 | 25660 | 1,67 | 15400 | 100 | 0,29 | 0,0028 | 0,042 | 0,182 | 0,023 | 0,0079 | 0,052 | 0,026 | 0,018 | 0,002 | 0,064 | 0,001 | 0,011 | 0,009 | 0,003 | 0,002 | 0,002 | 0,0002 | 0,0029 | 20 | ja |
| 100 | 8,1 | 6,7 | 31370 | 1,92 | 16370 | 115 | 0,28 | 0,0027 | 0,036 | 0,182 | 0,022 | 0,0087 | 0,043 | 0,024 | 0,022 | 0,003 | 0,03 | 0,001 | 0,011 | 0,001 | 0,003 | 0,002 | 0,002 | 0,0025 | 0,0015 | 17 | ja |
| 110 | 6,4 | 5 | 17650 | 1,58 | 11150 | 95 | 0,27 | 0,003 | 0,037 | 0,19 | 0,023 | 0,0054 | 0,043 | 0,032 | 0,016 | 0,004 | 0,011 | 0,001 | 0,013 | 0,001 | 0,003 | 0,002 | 0,002 | 0,0027 | 0,0014 | 23 | ja |
| 100 | 11,3 | 8,7 | 37480 | 1,82 | 20630 | 109 | 0,25 | 0,0035 | 0,041 | 0,19 | 0,023 | 0,0065 | 0,043 | 0,032 | 0,014 | 0,006 | 0,011 | 0,001 | 0,017 | 0,001 | 0,003 | 0,002 | 0,002 | 0,0027 | 0,0037 | 19 | ja |
| 100 | 7,1 | 5,9 | 28150 | 1,83 | 15360 | 110 | 0,22 | 0,0037 | 0,041 | 0,19 | 0,023 | 0,0065 | 0,043 | 0,032 | 0,014 | 0,006 | 0,011 | 0,001 | 0,017 | 0,001 | 0,003 | 0,002 | 0,002 | 0,0027 | 0,0037 | 18 | ja |
| 140 | 7,9 | 6,6 | 20250 | 2 | 10120 | 120 | 0,2 | 0,004 | 0,045 | 0,197 | 0,025 | 0,0094 | 0,045 | 0,036 | 0,007 | 0,003 | 0,011 | 0,003 | 0,022 | 0,002 | 0,006 | 0,003 | 0,002 | 0,0029 | 0,0022 | 16 | ja |
| 150 | 7,9 | 6,6 | 19050 | 1,92 | 9940 | 115 | 0,22 | 0,0043 | 0,045 | 0,197 | 0,025 | 0,0094 | 0,045 | 0,036 | 0,007 | 0,003 | 0,011 | 0,003 | 0,022 | 0,002 | 0,006 | 0,003 | 0,002 | 0,0029 | 0,0022 | 15 | ja |

Tabelle 2

Fig. 15

IF-Stahl

| Auflage in g/m2 beidseitig | Z | Z/d | P in Pascal Überdruck | v in m/s | P/v in SI Einheiten | Bandgeschwindigkeit in m/min | Wsa (5%) | C | Si | Mn | P | S | Al | Cr | Ni | Mo | Cu | V | Nb | Ti | Sn | Zr | As | N | N*(Ti+Nb)*S*10^6 | Heizrate K/s | erfindungsgemäß |
|---|---|---|---|---|---|---|---|---|---|---|---|---|---|---|---|---|---|---|---|---|---|---|---|---|---|---|---|
| 100 | 9,1 | 7 | 25240 | 1,67 | 15150 | 100 | 0,4 | 0,0022 | 0,005 | 0,133 | 0,008 | 0,0047 | 0,039 | 0,024 | 0,01 | 0,004 | 0,012 | 0,003 | 0,004 | 0,058 | 0,002 | 0,002 | 0,002 | 0,0043 | 1,25302 | 20 | nein |
| 90 | 4,68 | 3,9 | 20500 | 1,67 | 12275,45 | 100 | 0,43 | 0,0025 | 0,005 | 0,105 | 0,006 | 0,006 | 0,049 | 0,023 | 0,012 | 0,002 | 0,011 | 0,003 | 0,005 | 0,058 | 0,002 | 0,002 | 0,002 | 0,004 | 1,512 | 17 | nein |
| 100 | 8,9 | 7,4 | 34930 | 2 | 17460 | 120 | 0,35 | 0,0017 | 0,004 | 0,084 | 0,004 | 0,0055 | 0,041 | 0,026 | 0,013 | 0,003 | 0,018 | 0,003 | 0,006 | 0,051 | 0,002 | 0,002 | 0,002 | 0,0044 | 1,3794 | 15 | nein |
| 100 | 8,7 | 6,7 | 28210 | 1,83 | 15400 | 110 | 0,29 | 0,0023 | 0,005 | 0,102 | 0,008 | 0,0074 | 0,037 | 0,065 | 0,024 | 0,006 | 0,04 | 0,003 | 0,01 | 0,049 | 0,004 | 0,002 | 0,002 | 0,005 | 2,183 | 25 | ja |
| 110 | 6,4 | 5 | 17750 | 1,58 | 11210 | 95 | 0,28 | 0,0017 | 0,007 | 0,099 | 0,005 | 0,0052 | 0,05 | 0,025 | 0,009 | 0,003 | 0,013 | 0,004 | 0,011 | 0,078 | 0,005 | 0,003 | 0,002 | 0,0044 | 2,03632 | 17 | ja |
| 70 | 6,4 | 5,1 | 42670 | 2,17 | 19690 | 130 | 0,26 | 0,0019 | 0,005 | 0,072 | 0,005 | 0,0067 | 0,048 | 0,023 | 0,021 | 0,004 | 0,026 | 0,003 | 0,014 | 0,079 | 0,003 | 0,002 | 0,002 | 0,0051 | 3,17781 | 22 | ja |
| 100 | 9,9 | 8,3 | 36090 | 2 | 18050 | 120 | 0,25 | 0,0015 | 0,008 | 0,071 | 0,004 | 0,0068 | 0,039 | 0,023 | 0,016 | 0,006 | 0,012 | 0,003 | 0,017 | 0,08 | 0,002 | 0,002 | 0,002 | 0,0049 | 3,23204 | 15 | ja |
| 70 | 8,7 | 6,7 | 56730 | 2,17 | 26180 | 130 | 0,24 | 0,0021 | 0,007 | 0,072 | 0,004 | 0,0059 | 0,039 | 0,016 | 0,013 | 0,003 | 0,011 | 0,003 | 0,017 | 0,08 | 0,002 | 0,002 | 0,002 | 0,0058 | 3,31934 | 17 | ja |
| 70 | 8,5 | 6,5 | 55000 | 2,17 | 25345,62 | 130 | 0,23 | 0,0016 | 0,01 | 0,105 | 0,008 | 0,0061 | 0,04 | 0,021 | 0,021 | 0,005 | 0,009 | 0,003 | 0,022 | 0,072 | 0,003 | 0,002 | 0,002 | 0,0039 | 2,23626 | 16 | ja |
| 90 | 7,6 | 7,6 | 25500 | 1,67 | 15269,46 | 100 | 0,24 | 0,0014 | 0,006 | 0,082 | 0,005 | 0,0064 | 0,042 | 0,02 | 0,012 | 0,002 | 0,009 | 0,003 | 0,022 | 0,077 | 0,002 | 0,002 | 0,002 | 0,0054 | 3,42144 | 20 | ja |

Tabelle 3

Fig. 16

EP 3 583 237 B1

BH-Stahl

| Auflage in g/m2 beidseitig | Z | Z/d | P in Pascal Überdruck | v in m/s | P/v in SI Einheiten | Bandgeschwindigkeit in m/min | Wsa (5%) | C | Si | Mn | P | S | Al | Cr | Ni | Mo | Cu | V | Nb | Ti | Sn | Zr | As | B | N | Heizrate K/s | erfindungsgemäß |
|---|---|---|---|---|---|---|---|---|---|---|---|---|---|---|---|---|---|---|---|---|---|---|---|---|---|---|---|
| 100 | 8,1 | 6,8 | 34510 | 2 | 17260 | 120 | 0,34 | 0,0029 | 0,037 | 0,195 | 0,023 | 0,0089 | 0,046 | 0,028 | 0,019 | 0,006 | 0,038 | 0,001 | 0,008 | 0,001 | 0,005 | 0,002 | 0,002 | 0,0027 | 0,0024 | 18 | nein |
| 100 | 9,1 | 7 | 22890 | 1,53 | 14930 | 92 | 0,31 | 0,0021 | 0,041 | 0,2 | 0,023 | 0,0098 | 0,047 | 0,028 | 0,013 | 0,004 | 0,015 | 0,001 | 0,008 | 0,001 | 0,003 | 0,002 | 0,002 | 0,0033 | 0,0045 | 17 | nein |
| 70 | 9 | 6,9 | 53000 | 2,08 | 25480,77 | 125 | 0,28 | 0,0027 | 0,039 | 0,183 | 0,021 | 0,0063 | 0,04 | 0,017 | 0,013 | 0,003 | 0,017 | 0,001 | 0,011 | 0,001 | 0,002 | 0,002 | 0,002 | 0,0028 | 0,0048 | 22 | ja |
| 110 | 9,6 | 7,4 | 23950 | 1,63 | 14660 | 98 | 0,27 | 0,0032 | 0,042 | 0,19 | 0,022 | 0,0089 | 0,046 | 0,033 | 0,021 | 0,005 | 0,033 | 0,001 | 0,014 | 0,001 | 0,003 | 0,002 | 0,002 | 0,0032 | 0,0034 | 17 | ja |
| 110 | 6,4 | 5 | 17570 | 1,58 | 11100 | 95 | 0,26 | 0,0031 | 0,041 | 0,198 | 0,023 | 0,0088 | 0,039 | 0,037 | 0,019 | 0,006 | 0,033 | 0,001 | 0,014 | 0,001 | 0,004 | 0,002 | 0,002 | 0,0033 | 0,0022 | 20 | ja |
| 100 | 7,5 | 5,8 | 35950 | 2,49 | 14410 | 149 | 0,25 | 0,0034 | 0,039 | 0,184 | 0,024 | 0,0091 | 0,038 | 0,02 | 0,011 | 0,004 | 0,011 | 0,001 | 0,015 | 0,001 | 0,004 | 0,002 | 0,002 | 0,0029 | 0,0048 | 17 | ja |
| 100 | 11,3 | 8,7 | 37870 | 1,8 | 21040 | 108 | 0,23 | 0,0032 | 0,039 | 0,164 | 0,024 | 0,0091 | 0,038 | 0,02 | 0,011 | 0,004 | 0,011 | 0,001 | 0,015 | 0,001 | 0,004 | 0,002 | 0,002 | 0,0029 | 0,0048 | 23 | ja |
| 70 | 8,7 | 6,7 | 67230 | 2,5 | 26890 | 150 | 0,24 | 0,0037 | 0,039 | 0,15 | 0,024 | 0,0091 | 0,038 | 0,02 | 0,011 | 0,004 | 0,011 | 0,001 | 0,019 | 0,001 | 0,004 | 0,002 | 0,002 | 0,0029 | 0,0048 | 16 | ja |
| 90 | 4,68 | 3,9 | 20500 | 1,67 | 12275,45 | 100 | 0,23 | 0,004 | 0,041 | 0,15 | 0,025 | 0,0084 | 0,044 | 0,033 | 0,027 | 0,007 | 0,043 | 0,001 | 0,021 | 0,001 | 0,004 | 0,002 | 0,002 | 0,0034 | 0,0027 | 19 | ja |
| 140 | 8,3 | 6,9 | 21370 | 2 | 10680 | 120 | 0,22 | 0,0044 | 0,041 | 0,12 | 0,025 | 0,0084 | 0,044 | 0,033 | 0,027 | 0,007 | 0,043 | 0,001 | 0,023 | 0,001 | 0,004 | 0,002 | 0,002 | 0,0034 | 0,0027 | 16 | ja |

Tabelle 4

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0234698 B1

- DE 112014000102 T5

**In der Beschreibung aufgeführte Nicht-Patentliteratur**

- *Neuartige Blechverzinkung bringt Automobillack auf Hochglanz,* 17. Oktober 2013, www.blechnet.com